# EUROPÄISCHE PATENTANMELDUNG

(11) **EP 1 081 444 A2**
(43) Veröffentlichungstag der Anmeldung: **07.03.2001**
(21) Anmeldenummer: 00118956.2
(22) Anmeldetag: 01.09.2000
(51) Int. Cl.: F24F 13/065

(54) **Lüftungseinrichtung**

(30) Priorität: 03.09.1999 DE 19942015
(71) Anmelder: GEZE GmbH, 71229 Leonberg (DE)
(72) Erfinder: Foster, Lord Norman, London SW11 4AN (GB)

(57) **Zusammenfassung**

Die Erfindung betrifft eine Lüftungseinrichtung (1) zur Beeinflussung eines Raumklimas in Gebäuden, wobei die Längsachse (6) der Lüftungseinrichtung (1) in der Ebene einer Trennwand (2) liegt. Das Gehäuse (5) der Lüftungseinrichtung (1) und der darin angeordnete, schwenkbare Rotor (18) sind trommelförmig gestaltet. Die konstruktive Ausgestaltung der Erfindung gestattet vorzugsweise einen Einbau der Lüftungseinrichtung in (1) Pfosten-Riegel-Konstruktionen.

## Beschreibung

Die Erfindung betrifft eine Lüftungseinrichtung gemäß dem Oberbegriff des Anspruches 1.

Eine derartige Lüftungseinrichtung findet dort Anwendung, wo eine Anordnung von zu öffnenden Fenster- und/oder Türflügeln wegen Platzmangels oder aus sonstigen Gründen nicht möglich ist; sie ist ortsfest in einer geschlossenen Trennwand zwischen zwei Räumen, vorzugsweise zwischen einem Innenraum eines Gebäudes und der äußeren Umgebung angeordnet, wobei die Trennwand insbesondere luftdicht und/oder wärmeisolierend ausgebildet ist, so dass zwischen dem Innenraum des Gebäudes und der äußeren Umgebung beiderseits kein oder nur ein sehr geringer Luftaustausch stattfinden kann. Häufig sind derartige Trennwände als Pfosten-Riegel-Konstruktionen mit senkrechten Pfosten und waagerechten Riegeln ausgebildet, wobei die von den Pfosten und Riegeln umspannten Flächen durch feststehende Elemente, insbesondere Glasflügel, ausgefüllt werden. Diese Festflügel sind selbstverständlich luftdicht und vorzugsweise wärmeisolierend mit den Pfosten und Riegeln verbunden.

Der gewünschte Luftaustausch kann durch die Lüftungseinrichtung hergestellt werden, wobei je nach gewünschtem Raumklima die Bewegungsrichtung des Luftaustausches variieren kann. Diese Lüftungseinrichtung kann nicht nur in Außenwänden von Gebäuden, sondern auch in Zwischenwänden, wie z.B. zu Wintergärten, zum Einsatz kommen.

Die Erfindung geht aus von einer Technik, wie sie aus der DE 85 07 861 U1 bekannt ist. Dort wird eine Lüftungseinrichtung - angeordnet in einer Fensterkonstruktion - beschrieben, bei der ein rundes, drehbares Teil zur Steuerung des Luftaustausches in einem ebenfalls runden Gehäuse angeordnet ist. Dieses Gehäuse ist wiederum von einem weiteren Gehäuse umgeben. Durch das Vorhandensein des weiteren Gehäuses ist diese Lüftungseinrichtung sehr aufwendig gestaltet und damit teuer.

Ein weiterer Stand der Technik ist aus der EP 0 451 902 B1 bekannt. Bei dieser Lüftungseinrichtung für eine Gebäudefassade dichtet ein unrundes Verschlussteil, welches schwenkbar um seine waagerechte Längsachse ist, in senkrechter Stellung den Lüftungsschlitz ab. Ein sehr aufwendiges Gehäuse verhindert das Eindringen von Niederschlag von der Wetterseite her. Auf der Rauminnenseite befindet sich eine nicht verdeckte und somit nicht nur optisch störende Öffnung. Insgesamt ist auch diese Konstruktion sehr aufwendig und damit teuer.

Aus der DE 31 09 811 A1 ist ein Lüftungsrahmen für Fenster bekannt, bei dem in den horizontalen Rahmenteilen drehbar gelagerte Schlitzrohre angeordnet sind, die lediglich den Luftaustausch zwischen den Glasflächen bewerkstelligen.

Ferner sind auch - wie beispielsweise in der EP 0 554 960 B1 offenbart - in Fensterrahmen translatorisch verstellbare Lüftungsgitter, die den Luftaustausch zwischen einem Raumklima und der äußeren Umgebung ermöglichen, bekannt. Ein Nachteil dieser Erfindung liegt darin, dass Niederschlag in das Innere dieser Lüftungseinrichtung gelangen kann.

Beim Gegenstand der DE 31 24 545 A1 ist zur Unterstützung des Luftaustausches zwischen Außen- und Innenklima an einem Fenster ein Tangential-Lüfterrad angeordnet. Nachteilig ist hier wiederum, dass Niederschlag in das Innere der Lüftungseinrichtung gelangen kann.

Der Erfindung liegt die Aufgabe zugrunde, eine Lüftungseinrichtung zu schaffen, welche einfach aufgebaut und funktionssicher ist.

Die Aufgabe wird durch das Kennzeichen des Anspruchs 1 gelöst.

Die Lüftungseinrichtung ist bezogen auf die Längsachse waagerecht in die Trennwand eingebaut und weist zwei ineinander angeordnete Zylinder auf, wobei die Längsachse des inneren Zylinders konzentrisch zur Längsachse des äußeren Zylinders angeordnet ist. Die Zylinder können somit auch als ineinander geschobene Trommeln bezeichnet werden. Die Zylinder sind walzenförmig mit über ihre gesamte Erstreckung gleichbleibendem Durchmesser ausgebildet, können aber alternativ auch mit entlang ihrer Längsachse variablem Durchmesser ausgebildet sein, wobei jedoch der Spalt zwischen dem Innendurchmesser des äußeren Zylinders und dem Außendurchmesser des inneren Zylinders an jeder Stelle konstant sein sollte. Der äußere Zylinder stellt das Gehäuse der Lüftungseinrichtung dar und ist unbeweglich in der Trennwand angeordnet, wobei die Verbindung zwischen dem äußeren Zylinder und der Trennwand vorzugsweise luftdicht und wärmeisolierend ausgebildet ist. Der Innendurchmesser des äußeren Zylinders ist geringfügig größer als der Außendurchmesser des inneren Zylinders. Der innere Zylinder ist um seine Längsachse drehbar angeordnet. Die Betätigung des inneren Zylinders erfolgt über einen Handhebel.

Beide Zylinder weisen jeweils mindestens zwei Lüftungsöffnungen, vorzugsweise Lüftungsschlitze auf, wobei mindestens eine Lüftungsöffnung des Gehäuses zu der äußeren Umgebung und mindestens eine weitere Lüftungsöffnung des Gehäuses zum Innenraum des Gebäudes gerichtet ist.

Der innere Zylinder kann als zylindrische Trommel mit Lüftungsöffnungen ausgebildet sein. Alternativ kann der innere Zylinder nur Zylindersegmente aufweisen, wobei diese Zylindersegmente durch Stirnplatten relativ zueinander fixiert werden. In diesem Fall können die Zwischenräume zwischen den Zylindersegmenten als 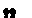 Lüftungsschlitze" des inneren Zylinders angesehen werden. Die Zylindersegmente sind in diesem Fall so angeordnet, dass bei geschlossener Stellung der Lüftungseinrichtung jede Lüftungsöffnung des Gehäuses vollständig durch ein Zylindersegment des inneren Zylinders überdeckt wird.

Die Lüftungsöffnungen des Gehäuses und des inneren Zylinders sind vorzugsweise jeweils in Form von Längsschlitzen parallel zu den Zylinderlängsachsen ausgebildet und bei geschlossener Stellung der Lüftungseinrichtung zueinander versetzt, d.h. sie überdecken sich bei geschlossener Stellung der Lüftungseinrichtung nicht. Durch Drehbewegung des inneren Zylinders relativ zum feststehenden äußeren Zylinder werden die Lüftungsöffnungen des Gehäuses und des inneren Zylinders in eine einander überdeckende Lage gebracht. Je nach dem Grad dieser Überdeckung geben die Lüftungsöffnungen somit eine mehr oder weniger große Öffnung zum Inneren der Lüftungseinrichtung frei, wobei die größte Öffnung bei vollständiger Überdeckung der Lüftungsöffnungen erreicht wird. Dadurch, dass - wie oben beschrieben - sowohl mindestens eine zu der äußeren Umgebung gerichtete Lüftungsöffnung als auch mindestens eine zum Innenraum des Gebäudes gerichtete Lüftungsöffnung vorhanden ist, ist somit bei geöffneter Stellung der Lüftungseinrichtung ein Luftaustausch zwischen der äußeren Umgebung und dem Innenraum des Gebäudes möglich.

Da die mindestens eine zu der äußeren Umgebung gerichtete, d.h. auf der sogenannten Wetterseite befindliche Lüftungsöffnung des Gehäuses nach unten gerichtet angeordnet ist, kann kein meteorologischer Niederschlag in das Innere der Lüftungseinrichtung eindringen. Sollte in Ausnahmefällen, z.B. in Verbindung mit starkem Wind, doch Niederschlag in das Innere der Lüftungseinrichtung eindringen, so läuft dieser an der Innenwandung des Gehäuses herunter und nach außen hin ab. Durch die hierzu diametrale, d.h. nach oben gerichtete Anordnung der Lüftungsöffnung des Gehäuses auf der Gebäudeinnenseite ist sichergestellt, dass kein Niederschlag in den Innenraum des Gebäudes eindringen kann.

Zur Vermeidung des Eindringens von Insekten und/oder anderen Kleintieren in den Innenraum des Gebäudes kann bei einer vorteilhaften Ausgestaltung des erfindungsgemäßen Gegenstands innerhalb der Lüftungseinrichtung und/oder im Bereich der Außenrundungen der Lüftungsöffnungen eine Gitter- und/oder Netzvorrichtung angeordnet sein.

In einer weiteren Ausgestaltung der erfindungsgemäßen Lüftungseinrichtung kann innerhalb der Lüftungseinrichtung eine Vorrichtung angeordnet sein, welche lediglich eine Strömungsrichtung der durch die Lüftungseinrichtung hindurchströmenden Luft zulässt und die andere Strömungsrichtung versperrt; diese Vorrichtung kann z.B. als Stauklappenvorrichtung ausgebildet sein.

Vorstellbar ist es im Rahmen der Erfindung auch, dass zur Unterstützung der Durchströmung innerhalb der Lüftungseinrichtung ein Gebläse, z.B. ein elektrisch betriebener Ventilator, vorzugsweise mit walzenförmigem Lüfterrad, angeordnet wird.

In einer weiteren Ausgestaltung der erfindungsgemäßen Lüftungseinrichtung kann innerhalb der Lüftungseinrichtung ein Heiz- und/oder Kühlelement angeordnet sein, welches die Temperatur der durch die Lüftungseinrichtung hindurchströmenden Luft verändert.

Das Gehäuse der Lüftungseinrichtung kann aus einem massiven Metallwerkstoff bestehen, z.B. aus stranggepresstem bzw. gezogenem Material gefertigt. Bei hohen Anforderungen an die wärmeisolierenden Eigenschaften der Trennwand kann es jedoch notwendig sein, für das Gehäuse der Lüftungseinrichtung bereichsweise oder vollständig einen Werkstoff mit geringerer Wärmeleitfähigkeit vorzusehen, z.B. einen Kunststoff. Ebenso ist es denkbar, das Gehäuse aus einem Hybridwerkstoff, z.B. einem Verbund von Metall und Kunststoff auszuführen.

In einer weiteren vorteilhaften Ausgestaltung der Erfindung kann die Betätigung der Lüftungseinrichtung durch Fremdenergie erfolgen, z.B. durch einen als Elektromotor ausgebildeten Stellmotor oder durch ein pneumatisches oder hydraulisches Stellglied. Durch Betätigung eines Schalters ist somit eine ferngesteuerte Betätigung der Lüftungseinrichtung möglich. Die ist insbesondere vorteilhaft, wenn die Lüftungseinrichtung an einer unzugänglichen Stelle in der Trennwand angeordnet ist und/oder mehrere Lüftungseinrichtungen gleichzeitig zu betätigen sind.

In Verbindung hiermit kann vorgesehen sein, im Innenraum des Gebäudes und/oder in der äußeren Umgebung und/oder im Inneren der Lüftungseinrichtung Sensoren anzuordnen. Die Sensoren können als Temperatursensoren und/oder Feuchtigkeitssensoren und/oder Schallsensoren und/oder Gassensoren ausgebildet sein, wobei vorgesehen sein kann, dass die Ausgangssignale der Sensoren einer übergeordneten Steuerung oder Regelung zugeführt werden. Hiermit ist es möglich, die Lüftungseinrichtung abhängig von Umwelteinflüssen zu steuern bzw. zu regeln, um beispielsweise bei Unterschreiten einer bestimmten Raumtemperatur und/oder bei Auftreten von Lärm und/oder Luftschadstoffen in der äußeren Umgebung die Lüftungseinrichtung automatisch zu schließen.

Die Lüftungseinrichtung kann ihrerseits Sensoren aufweisen, die die Stellung der Lüftungseinrichtung erfassen und an vorzugsweise optische Anzeigeeinrichtungen und/oder eine übergeordnete Steuerung oder Regelung weiterleiten.

Weitere vorteilhafte Merkmale und Ausgestaltungen der Erfindung werden in der Figurenbeschreibung und in den Ansprüchen beschrieben.

Die Erfindung wird in den Figuren näher erläutert. Dabei zeigt:
- **Figur 1**: einen Querschnitt durch die erfindungsgemäße Lüftungseinrichtung, eingebaut in eine Pfosten-Riegel-Konstruktion;
- **Figur 2**: einen Querschnitt durch die Lüftungseinrichtung im geschlossenen Zustand;
- **Figur 3**: einen Querschnitt durch die Lüftungseinrichtung im geöffneten Zustand;
- **Figur 4**: eine Schrägansicht der Lüftungseinrichtung;
- **Figur 5**: eine vergrößerte Schrägansicht der Stirnseite der Lüftungseinrichtung;
- **Figur 6**: eine Frontansicht der Lüftungseinrichtung, eingebaut in eine Pfosten-Riegel-Konstruktion.

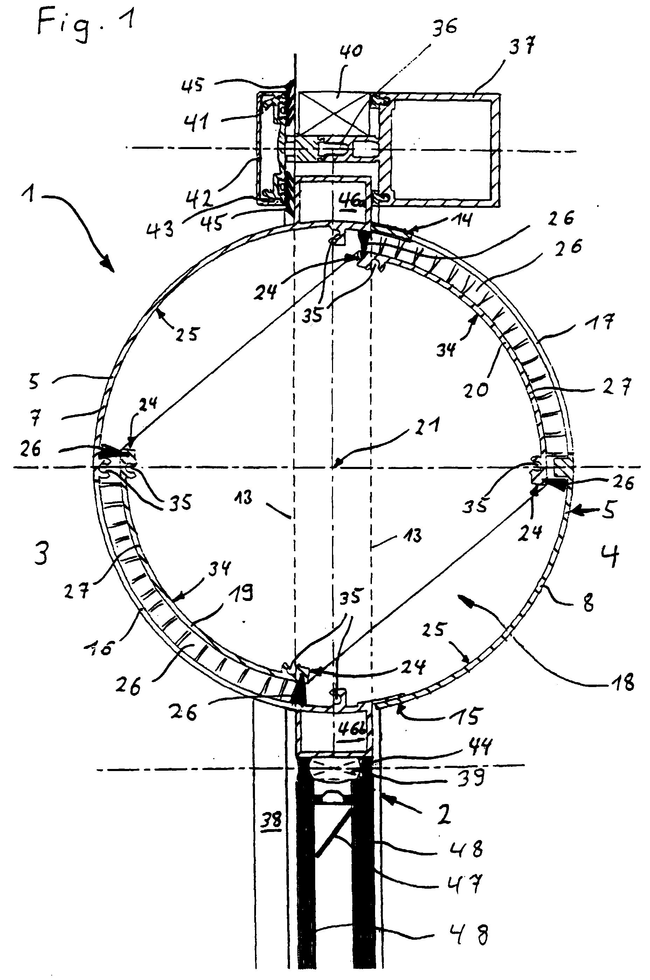

In **Figur 1** ist die erfindungsgemäße Lüftungseinrichtung 1 in einer Pfosten-Riegel-Konstruktion 37, 38 eingebaut dargestellt. Diese Pfosten-Riegel-Konstruktion 37, 38 bildet eine Trennwand 2, in der die Lüftungseinrichtung 1 angeordnet ist. Die Pfosten-Riegel-Konstruktion besteht aus waagerechten Riegeln 37 und senkrechten Posten 38. Der zum Pfosten 38 versetzt angeordnete, zum Innenraum des Gebäudes gerichtete Riegel 37 ist mittels einer Steckverbindung 36 mit einer Deckschale 42 verbunden. Eine Dichtung 45 verhindert das Eindringen von Wasser, und eine Blende 41 ist mit Hilfe einer Rastverbindung 43 auf der Deckschale 42 angebracht. In den von den Pfosten 38 und Riegeln 37 definierten Feldern sind Glasscheiben 48 angeordnet.

Das Gehäuse 5 der Lüftungseinrichtung 1 wird durch zwei als Zylinder-Halbschalen ausgebildete Gehäuse-Halbschalen 7, 8 gebildet. Die Gehäuse-Halbschalen 7, 8 sind über eine Steckverbindung 14 und Schraubverbindungen 15 miteinander verbunden und sind so zusammengefügt, dass sie mit ihrer konkaven Innenwandung einander zugewandt sind und einen zylinderförmigen Hohlraum umschließen. Die eine Gehäuse-Halbschale 7 ist zur äußeren Umgebung hin gerichtet und wird im folgenden als äußere Gehäusehälfte bezeichnet, während die andere Gehäuse-Halbschale 8 zum Innenraum des Gebäudes gerichtet ist und im folgenden als innere Gehäusehälfte bezeichnet wird.

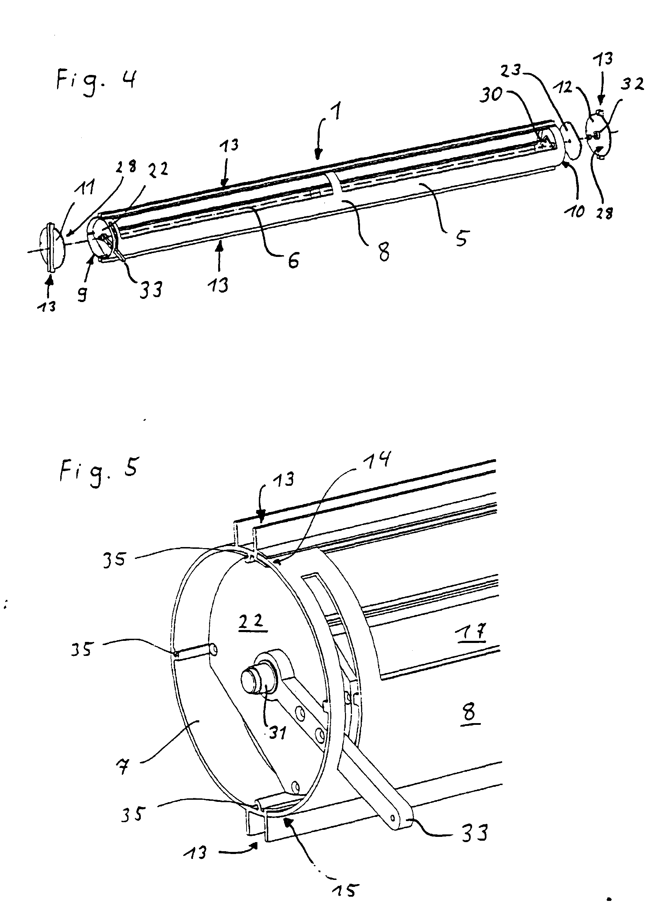

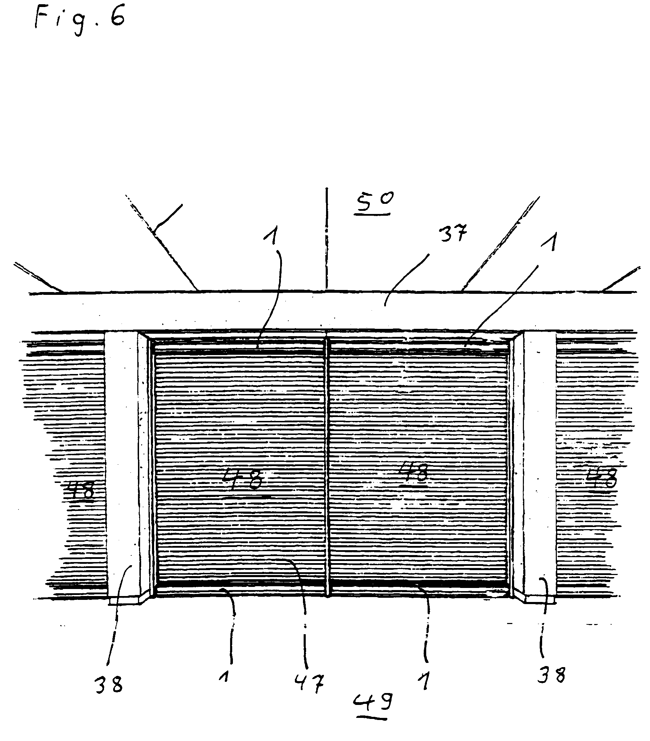

An der äußeren Gehäusehälfte 7 sind nach oben und nach unten gerichtete Kastenprofile 46 angeformt. Das obere Kastenprofil 46a greift in den Zwischenraum zwischen dem Riegel 37 und der Blende 41 ein. Eine Dichtung 45 dichtet den zwischen dem oberen Kastenprofil 46a und der Blende 41 befindlichen Spalt ab. Das untere Kastenprofil 46b stützt sich über eine Dichtung 39 auf einer Glasscheibe 48 der Trennwand 2 ab, wobei die Trennfugen mit Silikoneinlagen 44 ausgefüllt sind. Gestrichelt dargestellt sind hier auch die U-Profile 13 der in dieser Querschnittsdarstellung nicht sichtbaren Abdeckplatten 11, 12; die Position der Abdeckplatten ist in **Figur 4** genauer ersichtlich. Wie ebenfalls in **Figur 4** und in **Figur 5** gezeigt wird, werden die Abdeckplatten 11, 12 an den Stirnseiten 9, 10 des Gehäuses 5 mittels Schraubverbindungen befestigt, wobei die hier nicht gezeigten Befestigungsschrauben die Abdeckplatten 11, 12 durchgreifen und in Schraubkanäle 35 an den Stirnseiten 9, 10 der Gehäusehälften 7, 8 eingreifen. Die U-Profile 13 sind mit den vertikalen Pfosten 38 verbunden, indem sie entweder in diese eingreifen oder indem sie diese übergreifen, wobei auch diese Verbindung jeweils luftdicht und wärmeisolierend ausgebildet ist. Somit ist eine sichere, luftdichte und wärmeisolierende Befestigung der Lüftungseinrichtung 1 in der Trennwand 2 gewährleistet.

Im unteren Bereich der äußeren Gehäusehälfte 7 befindet sich die als Lüftungsschlitz ausgebildete Lüftungsöffnung 16, welche sich nach unten hin bis zum Ansatz des unteren Kastenprofils 46 erstreckt. Dadurch kann eventuell in das innere der Lüftungseinrichtung 1 eingedrungenes Regenwasser vollständig daraus abfließen. Bei der inneren Gehäusehälfte 8 befindet sich im oberen Bereich die als Lüftungsschlitz ausgebildete Lüftungsöffnung 17. Die Lüftungsöffnungen 16, 17 erstrecken sich jeweils über einen Winkelbereich von ca. 90° der jeweiligen Gehäusehälfte 7, 8.

Im Innenraum des durch die Gehäusehälften 7, 8 gebildeten Gehäuses 5 der Lüftungseinrichtung 1 ist der Rotor 18 um die zentrale Drehachse 21 drehbar angeordnet. Die zentrale Drehachse 21 des Rotors 18 ist kollinear zu der Längsachse 6 des Gehäuses 5 angeordnet, so dass der Rotor 18 konzentrisch zum Gehäuse 5 angeordnet ist. Die Drehbewegung des Rotors 18 erfolgt mittels einer Verstelleinrichtung 33, welche als Hebel ausgebildet ist und drehfest auf einem Lagerzapfen 31 des Rotors 18 angeordnet ist. Die Betätigung der Verstelleinrichtung 33 des Rotors 18 kann manuell oder auch motorisch erfolgen.

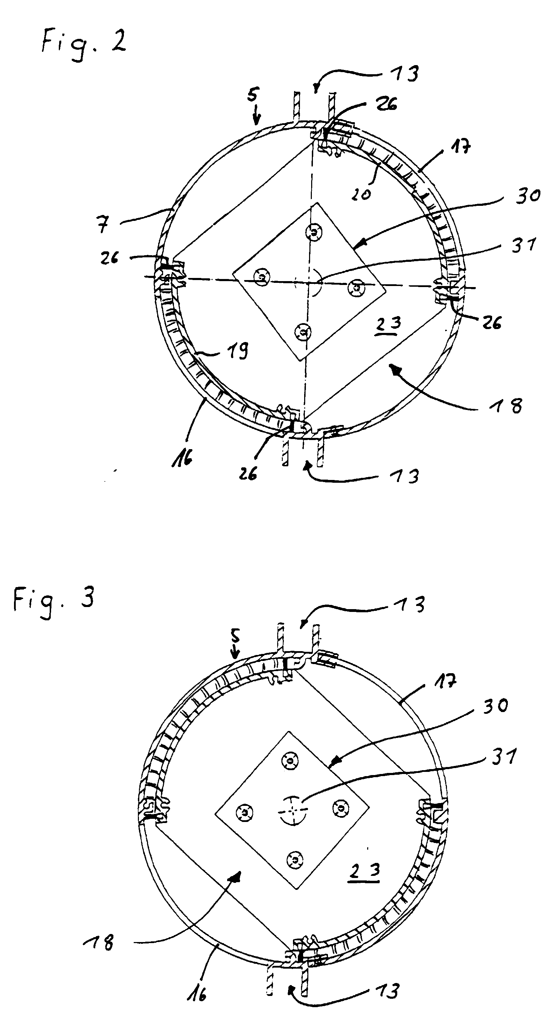

Der Rotor 18 besteht aus zwei jeweils als Zylinder-Viertelschalen ausgebildeten Zylindersegmenten 19, 20. Die Zylindersegmente 19, 20 liegen einander mit ihren Innenflächen 34 gegenüber und sind mittels zweier Stirnplatten 22, 23 (siehe **Figuren 2** und **3**), welche jeweils mittig eine Halteplatte 30 tragen, miteinander verbunden. Die Verbindung erfolgt jeweils über hier nicht eingezeichnete Schrauben, welche in Schraubkanäle 35 der Zylindersegmente 19, 20 eingreifen. Die Halteplatten 30 weisen jeweils mittig einen in der zentralen Drehachse 21 befindlichen Lagerzapfen 31 zur drehbaren Lagerung des Rotors 18 auf. Die Lagerzapfen 31 greifen hierzu in mittig an den Abdeckplatten 11, 12 angeformte Lagerbuchsen 32 ein, die in **Figur 4** erkennbar. Der Außenradius der Zylindersegmente 19, 20 des Rotors 18 ist geringfügig kleiner als der Innenradius der Innenflächen 25 der Gehäusehälften. Zur Abdichtung gegenüber den Innenflächen 25 der Gehäusehälften 6, 7 weisen die Zylindersegmente 19, 20 jeweils Dichtungselemente 26 auf, welche als Bürstendichtungen 26 ausgebildet sind, jedoch auch als Gummidichtlippen oder dergleichen ausgebildet sein können. Auch zwischen den Innenflächen 28 der Abdeckplatten 11, 12 (siehe **Figur 4**) und den Stirnplatten 22, 23 sind hier nicht eingezeichnete Dichtelemente angeordnet.

Mit den **Figuren 2** und **3** sollen die Endstellungen des Rotors 18 verdeutlicht werden. Statt der Kastenprofile 46 (wie in **Figur 1**) sind hier an der äußeren Gehäusehälfte 7 U-Profile 13 angeformt; diese U-Profile dienen in entsprechender Weise, wie in **Figur 1** gezeigt, zur Befestigung der Lüftungseinrichtung 1 mit einem horizontalen Riegel 37 und/oder einer Glasscheibe 48 der Trennwand 2.

In der **Figur 2** ist - entsprechend **Figur 1** - die Lüftungseinrichtung 1 in geschlossener Stellung dargestellt. Die Zylindersegmente 19, 20 des Rotors 18 überdecken hierbei vollständig die Lüftungsöffnungen 16, 17 des Gehäuses 5, wobei die Dichtungen 26 den Zwischenraum zwischen den Innenflächen der Gehäusehälften 7, 8 und den Außenflächen der Zylindersegmente 19, 20 dichtend abschließen.

**Figur 3** zeigt die Lüftungseinrichtung 1 in vollständig geöffneter Stellung, d.h. die Lüftungsöffnungen 16, 17 des Gehäuses 5 sind von den Zylindersegmenten 19, 20 des Rotors 18 nach einer Vierteldrehung der Rotors 18 im Uhrzeigersinn vollständig freigegeben.

In hier nicht gezeigten Zwischenpositionen des Rotors 18 sind die Lüftungsöffnungen 16, 17 des Gehäuses 5 von den Zylindersegmenten 19, 20 des Rotors 18 bereichsweise überdeckt und bereichsweise freigegeben, so dass der für den Luftaustausch zur Verfügung stehende Strömungsquerschnitt variabel einstellbar ist.

In der **Figur 6** ist eine mögliche Einbausituation der Lüftungseinrichtung 1 in einer Pfosten-Riegel-Konstruktion 37, 38 gezeigt. Ein unterhalb der Decke befindlicher horizontaler Riegel stützt sich auf mehreren vertikalen Pfosten 38 ab. Ferner sind Glasplatten 48 vorhanden, hier mit integrierten Jalousie-Lamellen 47, welche zwischen den Glasscheiben 48 aufgenommen sind. In diesem Ausführungsbeispiel sind zwei Lüftungseinrichtungen 1 im Bereich des Bodens 49 und zwei weitere Lüftungseinrichtungen 1 im Bereich der Decke 50 eines Raumes angeordnet. Diese Anordnung der Lüftungseinrichtungen 1 bewirkt einen besonders guten Luftaustausch, weil durch die unteren Lüftungseinrichtungen 1 z.B. kühle Zuluft in den Raum eintreten kann, während durch die oberen Lüftungseinrichtungen 1 warme Abluft austreten kann.

In Abwandlung zu den gezeigten Ausführungsbeispielen kann die Lüftungseinrichtung auch als tragendes Bauteil, z.B. als tragender horizontaler Träger der Fassade oder des Gebäudes, ausgebildet sein.

### Liste der Referenzzeichen

- 1: Lüftungseinrichtung
- 2: Trennwand
- 3: Umgebungsmedium
- 4: Umgebungsmedium
- 5: Gehäuse
- 6: Längsachse
- 7: äußere Gehäusehälfte
- 8: innere Gehäusehälfte
- 9: Stirnseite
- 10: Stirnseite
- 11: Abdeckplatte
- 12: Abdeckplatte
- 13: U-Profil
- 14: Steckverbindung
- 15: Schraubverbindung
- 16: Lüftungsöffnung
- 17: Lüftungsöffnung
- 18: Rotor
- 19: Zylinder-Viertelschale
- 20: Zylinder-Viertelschale
- 21: Drehachse
- 22: Stirnplatte
- 23: Stirnplatte
- 24: Längskante
- 25: Innenfläche des Gehäuses
- 26: Dichtungselement
- 27: bogenförmige Kante
- 28: Innenfläche der Abdeckplatten
- 29: Innenfläche der Stirnplatte
- 30: Halteplatte
- 31: Lagerzapfen
- 32: Buchse
- 33: Verstelleinrichtung
- 34: Innenfläche der Zylinder-Viertelschalen
- 35: Schraubkanal
- 36: Steckverbindung
- 37: Riegel
- 38: Pfosten
- 39: Dichtung
- 40: thermische Trennung
- 41: Blende
- 42: Deckschale
- 43: Klippverbindung
- 44: Silikon
- 45: Dichtung
- 46a: Kastenprofil
- 46b: Kastenprofil
- 47: Jalousielamellen
- 48: Glasscheibe
- 49: Boden
- 50: Decke

## Patentansprüche

1. Lüftungseinrichtung (1) zur Beeinflussung eines Raumklimas mit den folgenden Merkmalen:
die Lüftungseinrichtung (1) ist in einer Trennwand (2) eingebaut,
wobei die Lüftungseinrichtung (1) mit ihrer Längsachse (6) in der Ebene der Trennwand (2) liegt,
ein Teil der Lüftungseinrichtung (1) ragt in ein erstes Umgebungsmedium auf der ersten Seite der Trennwand (2) hinein, und ein anderer Teil der Lüftungseinrichtung (1) ragt in ein zweites Umgebungsmedium (4) auf der zweiten Seite der Trennwand (2) hinein,
die Lüftungseinrichtung (1) besteht aus einem äußeren, unbeweglichen Teil mit einem Gehäuse (5) und aus einem inneren, beweglichen Teil,
der innere Teil ist mittels einer Verstelleinrichtung (33) zur Lüftungseinstellung gegenüber dem äußeren Teil verdrehbar,
der äußere Teil und der innere Teil weisen Lüftungsschlitze (16, 17) auf, die in geschlossener Stellung der Lüftungseinrichtung (1) nicht deckungsgleich sind und in geöffneter Stellung der Lüftungseinrichtung (1) zumindest zum Teil überlappend unter Ausbildung von Durchgangsöffnungen,
**dadurch gekennzeichnet,**
dass das Gehäuse (5) der Lüftungseinrichtung (1) trommelförmig ausgestaltet ist.

2. Lüftungseinrichtung nach Anspruch 1,
**dadurch gekennzeichnet,** dass das Gehäuse (5) der Lüftungseinrichtung (1) aus zwei, vorzugsweise in einer vertikalen Ebene zusammengeführten, als Zylinder-Halbschalen ausgebildeten Gehäusehälften (7, 8) besteht, d.h. aus einer äußeren Gehäusehälfte (8) und einer inneren Gehäusehälfte (7), wobei die innere Gehäusehälfte (8) einem Innenraum eines Gebäudes zugewandt angeordnet ist.

3. Lüftungseinrichtung nach Anspruch 2,
**dadurch gekennzeichnet,** dass die Gehäusehälften (7, 8) mittels Steckverbindungen (14) und Schraubverbindungen (15) starr miteinander verbunden sind und vorzugsweise an ihren Stirnseiten (9, 10) je mit einer kreisförmigen Abdeckplatte (11, 12) verbunden, vorzugsweise verschlossen werden.

4. Lüftungseinrichtung nach einem der Ansprüche 1 bis 3,
**dadurch gekennzeichnet,** dass der Lüftungsschlitz (16) der äußeren Gehäusehälfte (7) im unteren Bereich der äußeren Gehäusehälfte (7) und der Lüftungsschlitz (17) der inneren Gehäusehälfte (8) im oberen Bereich der inneren Gehäusehälfte (8) angeordnet ist.

5. Lüftungseinrichtung nach einem der vorangehenden Ansprüche,
**dadurch gekennzeichnet,** dass innerhalb des Gehäuses (5) der Lüftungseinrichtung (1), konzentrisch zu dem Gehäuse (5) ein Rotor (18) angeordnet ist, der den inneren Teil der Lüftungseinrichtung (1) bildet.

6. Lüftungseinrichtung nach Anspruch 6,
**dadurch gekennzeichnet,** dass der Rotor (18) aus zwei Stirnplatten (22, 23) und zwei vorzugsweise starr miteinander verbundenen Zylinder-Viertelschalen (19, 20), die einander, bezogen auf eine Drehachse (21), gegenüberliegen, besteht, wobei die Zylinder-Viertelschalen (19, 20) so zueinander angeordnet sind, dass die Hüllfläche des Rotors (18) zylinderförmig ausgebildet ist.

7. Lüftungseinrichtung nach einem der vorangehenden Ansprüche,
**dadurch gekennzeichnet,** dass auf einer Innenfläche (29) der Stirnplatten (22, 23) Halteplatten (30) mit je einem Lagerzapfen (31) angeordnet sind, wobei die Lagerzapfen (31) in Buchsen (32) der Abdeckplatten (11, 12) eingreifen.

8. Lüftungseinrichtung nach Anspruch 8,
**dadurch gekennzeichnet,** dass an mindestens einer Halteplatte (30) die Verstelleinrichtung (33) zum Schwenken des Rotors (18) angebracht ist, wobei die Verstelleinrichtung (33) als Hebel ausgeführt ist.

9. Lüftungseinrichtung nach einem der Ansprüche 7 bis 9,
**dadurch gekennzeichnet,** dass im Bereich von Längskanten (24) der Zylinder-Viertelschalen (19, 20), zu einer Innenfläche (25) des Gehäuses (5) gerichtet, Dichtelemente (26), vorzugsweise bürstenförmige Dichtelemente (26), angeordnet sind.

10. Lüftungseinrichtung nach einem der Ansprüche 7 bis 10,
**dadurch gekennzeichnet,** dass im Bereich von bogenförmigen Kanten (27) der Zylinder-Viertelschalen (19, 20), zur Innenfläche (25) der Gehäusehälften (7, 8) und zu einer Innenfläche (28) der Abdeckplatten (11, 12) gerichtet, jeweils Dichtelemente (26), vorzugsweise bürstenförmige Dichtelemente (26), angeordnet sind.

11. Lüftungseinrichtung nach einem der vorangehenden Ansprüche,
**dadurch gekennzeichnet,** dass die Lüftungseinrichtung (1) in die Trennwand (2) einer Pfosten-Riegel-Konstruktion (37, 38) eingebaut ist.

12. Lüftungseinrichtung nach Anspruch 12,
**dadurch gekennzeichnet,** dass die Pfosten-Riegel-Konstruktion (37, 38) eine Außenfassade eines Gebäudes oder eine Wand innerhalb eines Gebäudes oder eine geneigte Fläche, insbesondere im Dach- und Firstbereich eines Gebäudes, darstellt.

13. Lüftungseinrichtung nach Anspruch 11 oder 12,
**dadurch gekennzeichnet,** dass an der äußeren Gehäusehälfte (7) sowie an die Abdeckplatten (11, 12) mindestens je ein Profil, z.B. ein U-Profil (13) oder ein Kastenprofil (46), zur Aufnahme in eine Pfosten-Riegel-Konstruktion angeformt ist.

14. Lüftungseinrichtung nach einem der vorangehenden Ansprüche,
**dadurch gekennzeichnet,** dass innerhalb der Lüftungseinrichtung (1) ein Geblase angeordnet ist.

15. Lüftungseinrichtung nach einem der vorangehenden Ansprüche,
**dadurch gekennzeichnet,** dass innerhalb der Lüftungseinrichtung (1) und/oder im Bereich der Außenrundungen der Lüftungsöffnungen (16, 17) eine Gitter- und/oder Netzvorrichtung angeordnet ist.

16. Lüftungseinrichtung nach einem der vorangehenden Ansprüche,
**dadurch gekennzeichnet,** dass innerhalb der Lüftungseinrichtung (1) eine Stauklappenvorrichtung angeordnet ist, welche so ausgebildet ist, dass lediglich eine Strömungsrichtung der durch die Lüftungseinrichtung (1) hindurchströmenden Luft möglich ist.

17. Lüftungseinrichtung nach einem der vorangehenden Ansprüche,
**dadurch gekennzeichnet,** dass innerhalb der Lüftungseinrichtung (1) ein Heiz- und/oder Kühlelement angeordnet ist, welches so ausgebildet ist, dass es die Temperatur der durch die Lüftungseinrichtung (1) hindurchströmenden Luft verändert.

18. Lüftungseinrichtung nach einem der vorangehenden Ansprüche,
**dadurch gekennzeichnet,** dass das Gehäuse (5) der Lüftungseinrichtung (1) zumindest bereichsweise aus einen Kunststoffwerkstoff besteht.

19. Lüftungseinrichtung nach einem der vorangehenden Ansprüche,
**dadurch gekennzeichnet,** dass das Gehäuse (5) der Lüftungseinrichtung (1) zumindest bereichsweise aus einen Hybridwerkstoff, z.B. einem Verbund von Metall und Kunststoff, besteht.

20. Lüftungseinrichtung nach einem der vorangehenden Ansprüche,
**dadurch gekennzeichnet,** dass die Lüftungseinrichtung (1) alternativ oder zusätzlich zu der manuellen Verstelleinrichtung (33) eine fremdenergieversorgte Betätigungsvorrichtung aufweist, z.B. einen Elektromotor oder ein pneumatisches oder hydraulisches Stellglied.

21. Lüftungseinrichtung nach Anspruch 20,
**dadurch gekennzeichnet,** dass im Inneren der Lüftungseinrichtung (1) und/oder in der äußeren Umgebung und/oder im Innenraum des Gebäudes mindestens ein Sensor angeordnet ist.

22. Lüftungseinrichtung nach Anspruch 21,
**dadurch gekennzeichnet,** dass der Sensor als Temperatursensor und/oder Feuchtigkeitssensor und/oder Schallsensor und/oder Gassensor ausgebildet ist.

23. Lüftungseinrichtung nach Anspruch 21 oder 22,
**dadurch gekennzeichnet,** dass das Ausgangssignal des Sensors einer übergeordneten Steuerung oder Regelung zugeführt wird.

24. Lüftungseinrichtung nach Anspruch 23,
**dadurch gekennzeichnet,** dass die Steuerung oder Regelung mindestens einen Eingang für das Ausgangssignal des Sensors aufweist.

25. Lüftungseinrichtung nach Anspruch 23 oder 24,
**dadurch gekennzeichnet,** dass die Steuerung oder Regelung mindestens einen Ausgang für die Aktivierung der fremdenergieversorgten Betätigungsvorrichtung aufweist, wobei die Aktivierung der fremdenergieversorgten Betätigungsvorrichtung vorzugsweise abhängig vom Ausgangssignal des Sensors erfolgt.

26. Lüftungseinrichtung nach einem der vorangehenden Ansprüche,
**dadurch gekennzeichnet,** dass die Lüftungseinrichtung (1) Sensoren zur Erfassung der Stellung der Lüftungseinrichtung (1) aufweist.

27. Lüftungseinrichtung nach Anspruch 26,
**dadurch gekennzeichnet,** dass die Lüftungseinrichtung (1) eine optische Anzeigeeinrichtung zur Anzeige der Stellung der Lüftungsvorrichtung (1) aufweist.

28. Lüftungseinrichtung nach Anspruch 27,
**dadurch gekennzeichnet,** dass die optische Anzeigeeinrichtung einen Eingang für das Ausgangssignal des Sensors aufweist.
